# EUROPEAN PATENT APPLICATION

(11) **EP 4 603 055 A1**
(43) Date of publication of application: **20.08.2025**
(21) Application number: 23877688.4
(22) Date of filing: 12.10.2023
(51) Int. Cl.: A61C 8/00, A61C 1/08

(54) **IMPLANT SURGERY GUIDE DEVICE**

(30) Priority: 14.10.2022 KR 20220131954; 29.08.2023 KR 20230113400
(71) Applicant: Osstemimplant Co., Ltd., Gangseo-gu Seoul 07789 (KR)
(72) Inventor: LEE, Young Seok, Seoul 07789 (KR)
(74) Representative: Klunker IP Patentanwälte PartG mbB
(86) International application number: PCT/KR2023/015678
(87) International publication number: WO 2024/080765

(57) **Abstract**

Provided in one embodiment of the present invention is an implant surgery guide device comprising: a support for covering the buccal surface, lingual surface and occlusal surface of a tooth; a surgical part, which corresponds to an implant surgical position, has a through hole coming in contact with the outer peripheral surface of a drill head of a drill device, and has an opening formed at one side thereof; and a guide part, which is formed in the opening of the surgical part, and has an oblique slit through which a boring means of the drill device can obliquely pass.

## Description

### [Technical Field]

The present invention relates to an implant surgery guide device.

### [Background Art]

In general, an abutment assembly refers to an artificial substitute configured to reproduce the same form and function as a natural tooth, and is configured to include an implant made of titanium as a substitute for a natural tooth, which has screw threads formed on the outer peripheral surface thereof so as to be installed into the alveolar bone; an abutment connectively installed on an upper portion of the implant and having an artificial tooth coupled to an upper portion thereof; and a fixing screw configured to fix the implant and the abutment to each other.

Briefly explaining a surgical method using an abutment assembly, first, an incision is made in the gingival area of a subject to expose the alveolar bone. Next, a location in the exposed alveolar bone where an implant is to be inserted is determined, and a boring tool such as a drill device is used at the location to remove a portion of the alveolar bone in order to form a hole for implant placement. Thereafter, an abutment is connected to the implant placed in the formed hole, and the implant surgery is completed by securing a crown to the abutment.

In general, when the gingival area is cut during the implant surgery to expose the alveolar bone, and a perforation is then directly drilled on the alveolar bone using a drill or the like, it is difficult to accurately determine the exact location and direction in which the perforation work will be performed. Therefore, a separate surgical guide device is usually used.

The surgical guide device serves to accurately guide the direction, location, and depth of perforation formation during drilling.

The surgical guide device is provided in a shape corresponding to part or all of the teeth of the subject and includes a guide hole corresponding to the implant surgical position. However, there is a problem that it is difficult to insert a surgical drill device into the guide hole when the intermaxillary distance of the subject is not sufficient.

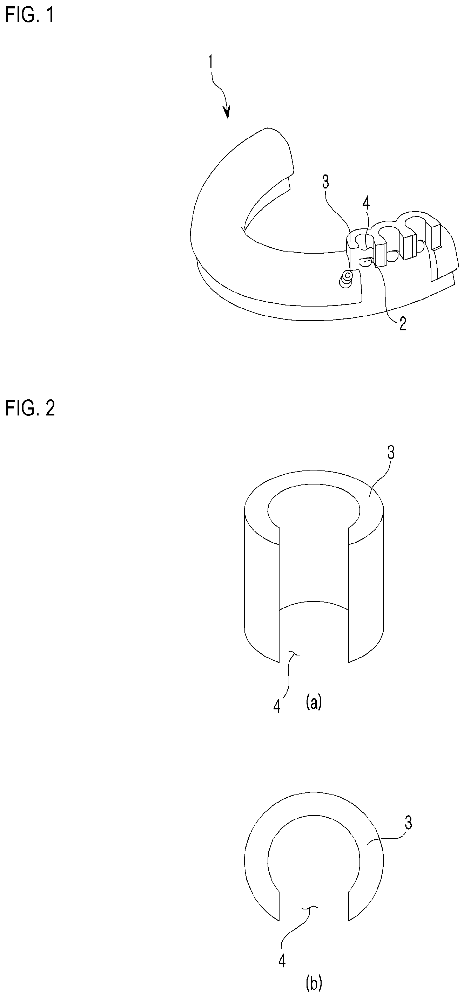

To solve such a problem, as shown in FIG. 1, a guide sleeve 3 extending along a guide hole 2 and having an open side was formed in a conventional surgical guide device 1. Specifically, as shown in FIG. 2, an axial slit 4 was formed in the side of the guide sleeve 3 so that a drill device could enter from the side through the axial slit 4.

However, in the related art, since the drill device was positioned in an axial direction along the axial slit 4 and introduced into the guide hole 2, there was still a problem that it was difficult to introduce the drill device when the implant surgical position was adjacent to the temporomandibular joint, such as the molar region.

In addition, as the side of the guide sleeve 3 was opened, there was a problem in that the head part of the drill device was pushed out the open side of the guide sleeve 3 by the centrifugal force of the drill during drilling, thereby reducing the accuracy of drilling.

### [Disclosure]

### [Technical Problem]

The present invention is designed to solve the above-described problems of the related art, and thus it is an object of the present invention to provide an implant surgery guide device capable of ensuring the accuracy of drilling while allowing easy entry of a drill device.

### [Technical Solution]

According to one aspect of the present invention, there is provided a guide sleeve including a guide body formed so that one side is open, and having a hollow structure having a guide hole, with which an outer peripheral surface of a drill head of a drill device comes into contact, formed in the center thereof; and a pair of anti-separation parts extending respectively from the left and right ends of the guide body along the circumference of the guide body and spaced apart from each other to have an oblique slit formed therebetween.

According to one embodiment, the pair of anti-separation parts may be spaced apart by a distance greater than or equal to the diameter of a boring means of the drill device and less than or equal to the outer diameter of the drill head.

According to one embodiment, the first anti-separation part may be formed to have a decreasing circumferential length as it goes down along the axial direction of the guide hole, and the second anti-separation part may be formed to have a decreasing circumferential length as it goes up along the axial direction of the guide hole.

According to one embodiment, the opposing surfaces of the pair of anti-separation parts facing each other may be formed as flat surfaces.

According to one embodiment, the opposing surfaces of the pair of anti-separation parts facing each other may be formed as curved surfaces having a predetermined curvature.

According to one embodiment, the guide body and the pair of anti-separation parts may be formed to have the same curvature.

According to another aspect of the present invention, there is provided an implant surgery guide device including the guide sleeve, a support configured to cover a buccal surface, a lingual surface, and an occlusal surface of a tooth; and a surgical part having a through hole with which the outer periphery of the guide sleeve comes into contact along an implant surgical position on the support, and having an opening formed in one side so that the side is exposed.

According to still another aspect of the present invention, there is provided an implant surgery guide device including a support configured to cover a buccal surface, a lingual surface, and an occlusal surface of a tooth; a surgical part corresponding to an implant surgical position, having a through hole with which the outer peripheral surface of a drill head of a drill device comes into contact, and having an opening formed in one side thereof; and a guide part formed in the opening of the surgical part and having an oblique slit, through which a boring means of the drill device may obliquely pass, formed therein.

According to one embodiment, the guide part may include first and second anti-separation parts extending respectively from the left and right ends of the opening along the periphery of the opening and spaced apart from each other to have the oblique slit formed therebetween.

According to one embodiment, the first and second anti-separation parts may be spaced apart by a distance greater than or equal to the diameter of the boring means of the drill device and less than or equal to the outer diameter of the drill head.

According to one embodiment, the first anti-separation part may be formed to have a decreasing circumferential length as it goes down along the axial direction of the through hole, and the second anti-separation part may be formed to have a decreasing circumferential length as it goes up along the axial direction of the through hole.

According to one embodiment, the opposing surfaces of the first and second anti-separation parts facing each other may be formed as flat surfaces.

According to one embodiment, the opposing surfaces of the first and second anti-separation parts facing each other may be formed as curved surfaces having a predetermined curvature.

According to one embodiment, the surgical part and the first and second anti-separation parts may be formed to have the same curvature.

According to one embodiment, the surgical part and the guide part may be formed integrally.

### [Advantageous Effects]

According to one aspect of the present invention, the drill head can be introduced while being tilted at a predetermined angle due to the oblique slit. Accordingly, the drill head can be easily introduced in a case where the gap between teeth is narrow, such as in the molar region.

In addition, the opening angle of the drill head can be reduced compared to those of the conventional drill heads due to the oblique slit, and accordingly, the drill device can be supported more stably on the inner periphery of the surgical part or the guide sleeve, thereby improving the accuracy of drilling.

However, the effects of the present invention are not limited to the above-described effects, and should be understood to encompass all effects deducible from the configuration described in the detailed description of the present invention or in the claims.

### [Description of Drawings]

FIG. 1 is a perspective view of a conventional surgical guide device.
FIG. 2 shows a perspective view and a top view of a conventional guide sleeve.
FIG. 3 is a perspective view of an implant surgery guide device according to a first embodiment of the present invention.
FIG. 4 shows a perspective view, a top view, and a front view of a guide sleeve according to the first embodiment of the present invention.
FIG. 5 shows another example of the guide sleeve according to the first embodiment of the present invention.
FIG. 6 is a front view of drill devices coupled to the guide sleeve according to the first embodiment of the present invention and a conventional guide sleeve.
FIG. 7 shows cross-sectional views taken along lines A-A and B-B of FIG. 6.
FIG. 8 is a drawing showing a method of using the implant surgery guide device according to the first embodiment of the present invention.
FIG. 9 is a perspective view of an implant surgery guide device according to a second embodiment of the present invention.
FIG. 10 shows a perspective view, a top view, and a front view of a surgical part and a guide part according to the second embodiment of the present invention.
FIG. 11 shows another example of the guide part according to the second embodiment of the present invention.
FIG. 12 is a front view of drill devices coupled to the surgical part and the guide part according to the second embodiment of the present invention and a conventional guide part.
FIG. 13 shows cross-sectional views taken along lines A-A and B-B of FIG. 12.
FIG. 14 is a drawing showing a method of using the implant surgery guide device according to the second embodiment of the present invention.

### [Mode for Invention]

Hereinafter, the present invention will be described with reference to the accompanying drawings. However, it should be understood that the present invention can be implemented in various other forms, and thus is not limited to the exemplary embodiments described herein. Also, in the drawings, descriptions of parts unrelated to the detailed description will be omitted to clearly describe the present invention. Throughout the specification, like numbers refer to like elements.

Throughout the specification, when a certain element is referred to as being "connected" to another element, it can be directly connected to the other element or indirectly connected to the other element with one or more intervening elements interposed therebetween. In addition, when an element is referred to as "including" another element, it should be understood that the element may further include still another element rather than excluding the still another element unless specifically indicated otherwise.

Terms including ordinal numbers such as "first" or "second" used in this specification may be used to describe various components or steps, but the components or steps should not be limited by the ordinal numbers. Terms including ordinal numbers should be interpreted only to distinguish one component or step from other components or steps.

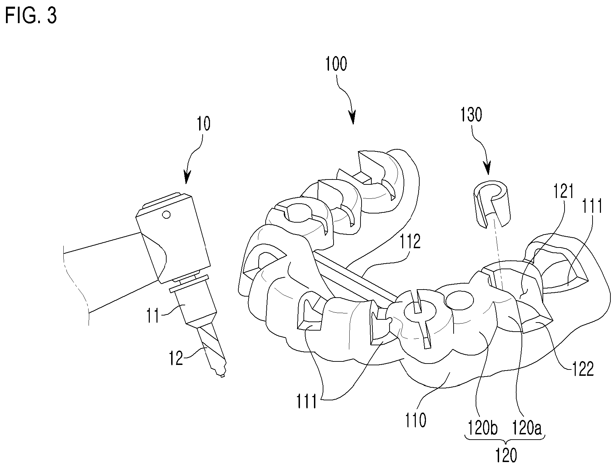

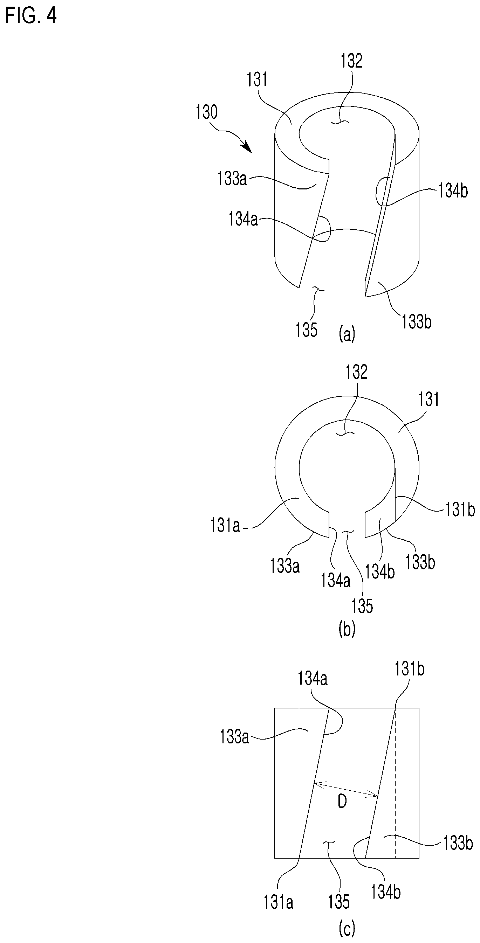

FIG. 3 is a perspective view of an implant surgery guide device according to first embodiment of the present invention, and FIG. 4 shows a perspective view, a top view, and a front view of a guide sleeve according to the first embodiment of the present invention.

Hereinafter, referring to FIGS. 3 and 4, the implant surgery guide device 100 according to the first embodiment of the present invention will be described in detail.

The implant surgery guide device 100 according to the first embodiment of the present invention is configured to include a support 110, a surgical part 120, and a guide sleeve 130.

The support 110 may be formed to cover a buccal surface, a lingual surface, and an occlusal surface of a tooth. Specifically, the support 110 may be formed to cover the buccal surface, which is a surface facing the cheek, the lingual surface, which is a surface facing the tongue, and the occlusal surface, which is a surface with which the teeth come into contact.

In FIG. 3, the support 110 is shown as having a shape formed to cover the entire lower jaw, but the support 110 may be formed to cover the entire upper jaw or part of the upper jaw, or the entire lower jaw or part of the lower jaw depending on the number or position of dental prosthesis implants, and the present invention is therefore not limited thereto. In other words, in addition to a shape that covers the entire set of teeth, the support 110 may also be formed to cover only a portion of the teeth when some of the teeth are lost.

The support 110 may be formed to conform to the outer surface profile of the gums and crowns of the subject.

A plurality of through grooves 111 are preferably formed on one side of the support 110. In this case, the through grooves 111 are formed through a surface of the support 110 and it is possible to confirm whether the gums and teeth of the subject are correctly aligned and inserted into the support 110 through the through grooves 111.

The lingual surfaces of the support 110 are preferably interconnected by a reinforcing part 112. Specifically, the reinforcing part 112 serves to connect the lingual surfaces of the support 110 that are arranged to face each other, thereby ensuring high durability of the support 110.

The surgical part 120 is formed on an upper portion of the support 110, and a circular through hole 121 may be formed in the center to penetrate toward the gums. Specifically, when the support 110 is shaped to be installed on the upper jaw, the through hole 121 may be formed to be recessed upward, and when the support 110 is shaped to be installed on the lower jaw, the through hole 121 may be formed to be recessed downward.

At least one through hole 121 may be formed according to the number of perforations for implant placement. That is, at least one through hole 121 may be formed so that the through hole 121 can be arranged coaxially with the perforation site of the alveolar bone. When a plurality of through holes 121 are formed, the through holes 121 may be arranged to correspond to perforation sites, respectively. The surgical part 120 may be formed integrally so that the plurality of through holes 121 are arranged in a row along the teeth.

A drill device 10 may be rotatably supported on the inner surface of the through hole 121. Specifically, the through hole 121 may be formed to have an inner diameter that may come into contact with the outer peripheral surface of the drill head 11 of the drill device 10 so as to support the rotation of a boring means 12 while coming into contact with the outer peripheral surface of the drill head 11.

An opening 122 may be formed in the side of the surgical part 120 so that the drill device 10 can be inserted into the through hole 121 from the buccal surface. For example, the surgical part 120 may be formed in an arc shape with an open buccal surface, *i.e.,* a C-shaped cross section.

Here, the opening 122 may be formed on the buccal surface facing the inner surface of the cheek of the subject, but the present invention is not limited thereto. In this case, the opening 122 may be formed on the lingual surface facing the tongue, and may also be formed on both the buccal and lingual surfaces.

In addition, since the opening capacity of the oral cavity is limited in a surgical part 120a on the molar side, it is difficult to introduce the surgical drill device 10. Therefore, it is preferable to form the opening 122, but the present invention is not limited thereto. When a space may be secured while opening and closing the oral cavity, as in the surgical part 120b, the opening 122 may be omitted.

Referring to FIGS. 3 and 4, the guide sleeve 130 may include a guide body 131 having a hollow structure in which a guide hole 132 is formed in the center thereof and extending along the axial direction of the guide hole 132. The guide sleeve 130 may be inserted into the through hole 121 of the surgical part 120 and supported on the inner peripheral surface of the through hole 121.

In an exemplary embodiment, the surgical part 120 and the guide sleeve 130 may be formed integrally. In this case, since a process of coupling the guide sleeve 130 to the surgical part 120 during surgery is omitted, the user's convenience may be improved.

The drill device 10 may be rotatably supported by the inner peripheral surface of the guide body 131. Specifically, the guide hole 132 may be formed to have an inner diameter that may contact the outer peripheral surface of the drill head 11 of the drill device 10 so as to support the rotation of the boring means 12 while coming into contact with the outer peripheral surface of the drill head 11.

Meanwhile, the guide sleeve 130 may be formed to open the buccal surface so that the drill device 10 can be inserted into the guide hole 132 from the buccal surface. The guide sleeve 130 may be cut to expose the buccal surface. The guide sleeve 130 may have an oblique slit 135 formed by opening the buccal surface. Specifically, the guide body 131 may be formed in an arc shape with an open buccal surface, *i.e.,* a C-shaped cross section.

Meanwhile, as described above, a slit is formed parallel to the axial direction in the conventional guide sleeve. In this case, when an implant surgery site is adjacent to the temporomandibular joint such as the molar region, it is difficult for the surgical drill device to enter the guide hole. Also, there was a problem in that the drill head of the drill device was pushed out the open side of the guide sleeve by the centrifugal force during drilling, thereby reducing the accuracy of drilling.

Accordingly, the guide sleeve 130 according to one embodiment of the present invention is characterized by including a pair of anti-separation parts 133a and 133b having an oblique slit 135 formed therein.

The oblique slit 135 may be formed to be inclined at a predetermined angle with respect to the axial direction of the guide sleeve 130. According to various embodiments of the present invention, since the oblique slit 135 is formed to be inclined with respect to the axial direction in the guide sleeve 130, the drill head 11 may be introduced while being tilted at a predetermined angle. That is, the introduction of the drill head 11 may be facilitated in a case where the gap between the teeth is narrow.

Here, since the oblique slit 135 is formed to have a width D greater than or equal to the diameter of the boring means 12 of the drill device 10 and less than or equal to the outer diameter of the drill head 11, the boring means 12 may pass through the oblique slit 135, but the drill head 11 may not exit through the oblique slit 135.

According to one embodiment, the oblique slit 135 may extend toward the support 110 while maintaining the formed angle. That is, the oblique slit 135 may extend long in the downward direction. In this case, the drill device 10 may more easily enter the oblique slit 135.

The pair of anti-separation parts 133a and 133b are formed to extend respectively from the left and right ends 131a and 131b of the open side of the guide body 131 along the circumference of the guide body 131, respectively, and formed to be spaced apart from each other.

Specifically, the first anti-separation part 133a may be formed to have a gradually decreasing circumferential length as it goes down along the axial direction of the guide sleeve 130, and the second anti-separation part 133b may be formed to have a gradually decreasing circumferential length as it goes up along the axial direction of the guide sleeve 130. Here, the guide body 131 and the first and second anti-separation part 133a and 133b may be formed to have the same curvature.

According to one exemplary embodiment, the width of the oblique slit 135 when viewed from above as in FIG. 4B may be different from the width D of the oblique slit 135 when viewed from the front as in FIG. 4C. The width D of the oblique slit 135 when the guide sleeve 130 is viewed from the front may be formed to be larger than the width of the oblique slit 135 when viewed from above. According to various embodiments of the present invention, since the drill device 10 enters from the buccal surface in an oblique state as when the guide sleeve 130 is viewed from the front, the drill device 10 may enter through a relatively wide width D to facilitate the entry of the drill device 10. When drilling is performed using the drill device 10, since the drill device 10 is arranged parallel to the axial direction, separation may be prevented due to the relatively narrow width as when the guide sleeve 130 is viewed from above.

For example, when the circumferential length along the axial direction of the guide sleeves 130 of the first anti-separation part 133a and the second anti-separation part 133b is reduced at a constant rate, the opposing surfaces 134a and 134b of the pair of anti-separation parts 133a and 133b facing each other may be formed as flat surfaces as shown in FIGS. 4A and 4C, so that an oblique slit 135 can be formed between the first anti-separation part 133a and the second anti-separation part 133b. In an exemplary embodiment, the opposing surfaces 134a and 134b of the first anti-separation part 133a and the second anti-separation part 133b may be formed to have a straight shape when viewed from the buccal surface as shown in FIG 4C. The gap between the opposing surfaces 134a and 134b may be formed at a constant interval, but the present invention is not limited thereto. In addition, the circumferential lengths of the first anti-separation part 133a and the second anti-separation part 133b may also be reduced at different rates.

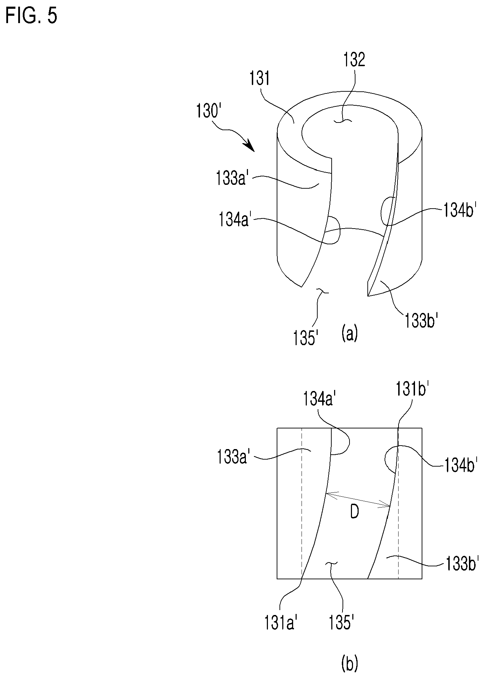

FIG. 5 shows another example of the guide sleeve according to the first embodiment of the present invention.

Specifically, the opposing surfaces 134a' and 134b' of a first anti-separation part 133a' and a second anti-separation part 133b' of a guide sleeve 130' may be formed as curved surfaces having a predetermined curvature when viewed from the side. In this case, an oblique slit 135' of the guide sleeve 130' may be formed in a curved shape.

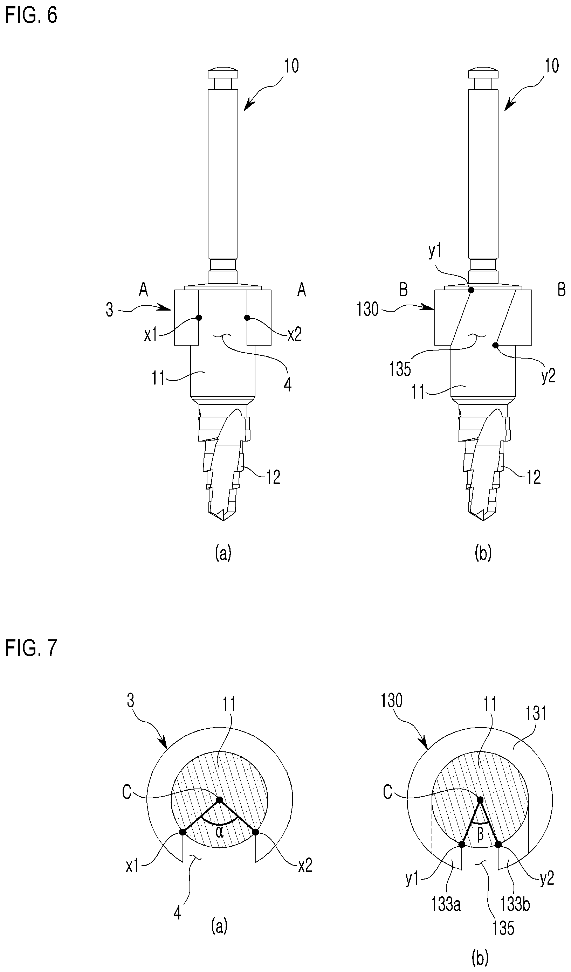

FIG. 6 is a front view of drill devices 10 coupled to the guide sleeve 130 according to the first embodiment of the present invention and a conventional guide sleeve 3, and FIG. 7 shows cross-sectional views taken along lines A-A and B-B of FIG. 6.

Hereinafter, a guide sleeve 130 according to the first embodiment of the present invention and a conventional guide sleeve 3 will be compared in detail with reference to FIGS. 6 and 7.

In the case of the drill head 11 inserted into the conventional guide sleeve 3, a portion of the outer periphery of the drill head 11 is exposed to the buccal surface through an axial slit 4. In this case, the opening angle α of the drill head 11 with respect to the guide sleeve 3 may be defined as an angle formed by a pair of open ends x1 and x2 of the guide sleeve 3 and the rotation axis C of the drill head 11.

On the other hand, since the oblique slit 135 of the guide sleeve 130 according to the first embodiment of the present invention is formed in a diagonal direction, an upper portion of the drill head 11 comes into contact with the circumferential end y1 of the first anti-separation part 133a, and a middle portion of the drill head 11 comes into contact with the circumferential end y2 of the second anti-separation part 133b. That is, the opening angle β of the drill head 11 with respect to the guide sleeve 130 may be defined as an angle formed by the ends b1 and b2 of the first and second anti-separation parts 133 and the rotation axis C of the drill head 11.

Here, the contact points y1 and y2 of the drill head 11 and the guide sleeve 130 move inward compared to the conventional contact points x1 and x2.

That is, as the oblique slit 135 is formed in the guide sleeve 130, the opening angle β of the drill head 11 with respect to the guide sleeve 130 is reduced compared to the conventional opening angle α. Accordingly, the drill device 10 may be supported more stably on the inner periphery of the guide sleeve 130, thereby improving the accuracy of drilling.

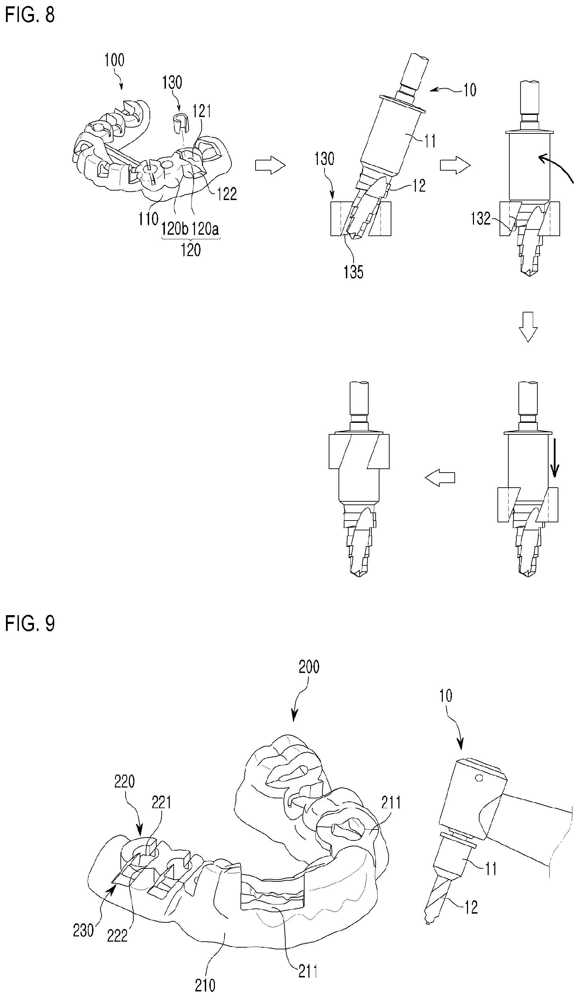

FIG. 8 is a diagram showing a method of using the implant surgery guide device 100 according to the first embodiment of the present invention.

Hereinafter, the method of using the implant surgery guide device 100 according to the first embodiment of the present invention will be described in detail with reference to FIG. 8.

After the guide sleeve 130 is coupled to the inner peripheral surface of the through hole 121 of the surgical part 120 so that the oblique slit 135 faces the opening 122 of the surgical part 120, the boring means 12 of the drill device 10 is tilted to match an inclination angle of the oblique slit 135 so that the boring means 12 can pass through the opening 122 and the oblique slit 135.

When the boring means 12 is inserted into the guide hole 132 of the guide sleeve 130, the tilted drill device 10 is straightened and inserted toward the lower side of the guide hole 132 so that the outer peripheral surface of the drill head 11 comes into surface contact with the inner peripheral surface of the guide body 131.

Accordingly, the drill device 10 is rotatably supported along the inner periphery of the guide sleeve 130, and may form a perforation in the alveolar bone in the axial direction of the guide hole 132.

In this way, even when a sufficient space for insertion of the drill device 10 is not secured, since the drill device 10 may pass through the side of the surgical part 120, the drill device 10 may be easily inserted into the guide hole 132 of the guide sleeve 130 through the opening 122 and the oblique slit 135 formed in the sides of the surgical part 120 and the guide sleeve 130, thereby improving the ease of use of the product.

Also, since an excessive pressure on the oral opening or the cheek/mouth corner for insertion of the drill device 10 may be minimized, the subject's discomfort may be significantly reduced.

In addition, when the oblique slit 135 is formed in the guide sleeve 130, the opening angle β of the drill head 11 with respect to the guide sleeve 130 is reduced compared to the conventional opening angle α. Accordingly, the drill device 10 may be supported more stably on the inner periphery of the guide sleeve 130, thereby improving the accuracy of drilling.

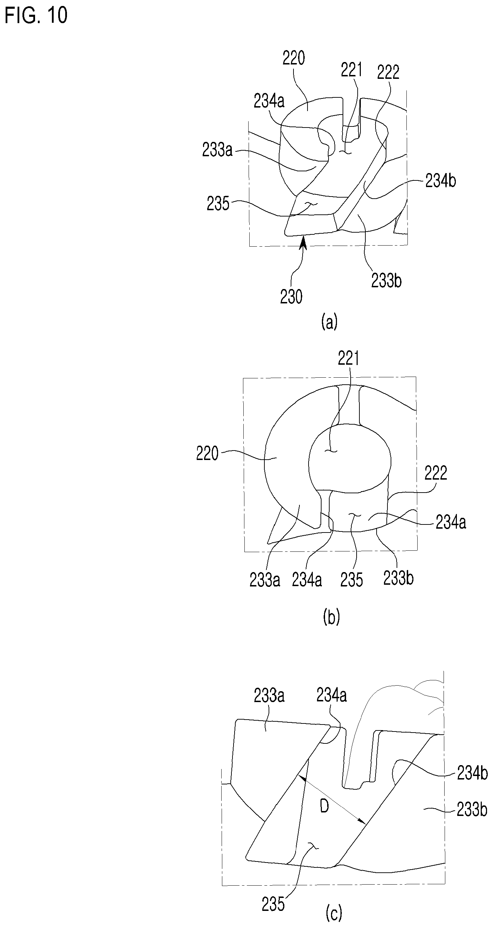

FIG. 9 is a perspective view of an implant surgery guide device according to a second embodiment of the present invention, and FIG. 10 shows a perspective view, a top view, and a front view of a surgical part and a guide part according to the second embodiment of the present invention.

Hereinafter, the implant surgery guide device 200 according to second embodiment of the present invention will be described in detail with reference to FIGS. 9 and 10. Hereinafter, parts overlapping with the above-described embodiments will be omitted, and like parts will have like reference numerals. (However, the detailed positional relationship follows the drawings corresponding to each embodiment.)

The implant surgery guide device 200 according to the second embodiment of the present invention is configured to include a support 210, a surgery unit 220, and a guide part 230.

The implant surgery guide device 200 according to the second embodiment of the present invention differs from the above-described embodiments in that the guide part 230 is formed integrally with the surgical part 220.

The guide part 230 is located on the side of the opening 222 of the surgical part 220 to guide the drill device 20 to enter the through hole 221 of the surgical part 220, and is formed integrally with the surgical part 220.

The guide part 230 according to one embodiment of the present invention includes a pair of anti-separation parts 233a and 233b to form an oblique slit 235 configured to guide the drill device 10 to enter the through hole 221 of the surgical part 220 at an angle.

Specifically, the oblique slit 235 may be formed to be inclined at a predetermined angle with respect to the axial direction of the through hole 221. According to various embodiments of the present invention, when the oblique slit 235 of the guide part 230 is formed on the side of the surgical part 220 to be inclined with respect to the axial direction, the drill head 11 may be introduced while being tilted at a predetermined angle. That is, the drill head 11 may be easily introduced in a case where the gap between teeth is narrow.

Here, since the oblique slit 235 is formed to have a width D greater than or equal to the diameter of the boring means 12 of the drill device 10 and less than or equal to the outer diameter of the drill head 11, the boring means 12 may pass through the oblique slit 235, but the drill head 11 may not exit through the oblique slit 235.

According to one embodiment, the oblique slit 235 may extend toward the support 210 while maintaining the formed angle. That is, the oblique slit 235 may extend long in the downward direction. In this case, the drill device 10 may be more easily enter the oblique slit 235.

A pair of anti-separation parts 233a and 233b are formed to extend respectively along the periphery of the surgical part 220 from the left and right ends of the opening 222 and formed to be spaced apart from each other.

Specifically, the first anti-separation part 233a may be formed to have a gradually decreasing circumferential length as it goes down from the upper portion of the opening 222 along the axial direction of the through hole 221, and the second anti-separation part 233b may be formed to have a gradually decreasing circumferential length as it goes up from the lower portion of the opening 222 along the axial direction of the through hole 221. Here, the surgical part 220 and the first and second anti-separation parts 233a and 233b may be formed to have the same curvature.

In an exemplary embodiment, the width of the oblique slit 235 when viewed from above as shown in FIG. 10B may be different from the width D of the oblique slit 235 when viewed from the front as shown in FIG. 10C. The width D of the oblique slit 235 when the guide part 230 is viewed from the front may be formed to be larger than the width of the oblique slit 235 when viewed from above. According to various embodiments of the present invention, since the drill device 10 enters from the buccal surface in an oblique state as when the guide part 230 is viewed from the front, the drill device 10 may enter through a relatively wide width D to facilitate the entry of the drill device 10. When drilling is performed using the drill device 10, since the drill device 10 is arranged parallel to the axial direction, separation may be prevented due to the relatively narrow width as when the guide part 230 is viewed from above.

For example, when the circumferential length along the axial direction of the through holes 221 of the first anti-separation part 233a and the second anti-separation part 233b is reduced at a constant rate, the opposing surfaces 234a and 234b of the pair of anti-separation parts 233a and 233b facing each other may be formed as flat surfaces as shown in FIGS. 10A and 10C, so that an oblique slit 235 can be formed between the first anti-separation part 233a and the second anti-separation part 233b. In an exemplary embodiment, the opposing surfaces 234a and 234b of the first anti-separation part 233a and the second anti-separation part 233b may be formed to have a linear shape when viewed from the buccal surface as shown in FIG. 10C. The gap between the opposing surfaces 234a and 234b may be formed to be constant, but the present invention is not limited thereto. In addition, the circumferential lengths of the first anti-separation part 233a and the second anti-separation part 233b may also be reduced at different rates.

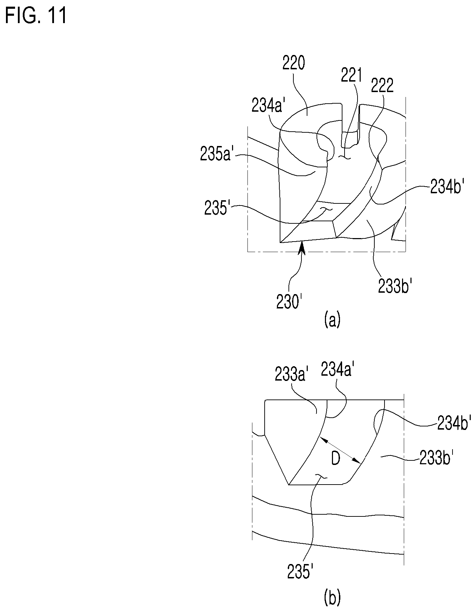

FIG. 11 shows another example of the guide part according to the second embodiment of the present invention.

Specifically, the opposing surfaces 234a' and 234b' of a first anti-separation part 233a' and a second anti-separation part 233b' of the guide part 230' may be formed as curved surfaces having a predetermined curvature when viewed from the side. In this case, the oblique slit 235' of the guide part 230' may be formed in a curved shape.

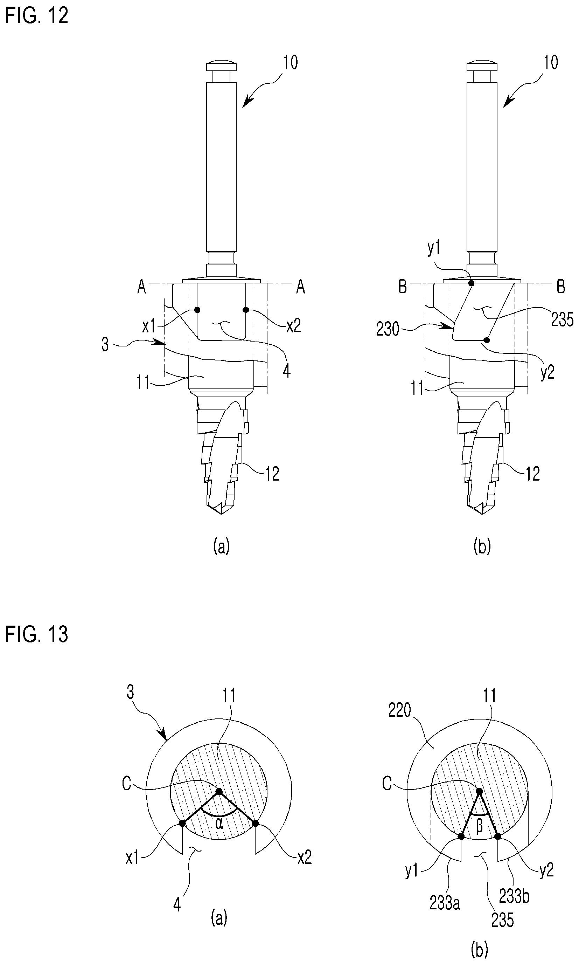

FIG. 12 is a front view of drill devices coupled to the surgical part and the guide part according to the second embodiment of the present invention and a conventional guide part, and FIG. 13 shows cross-sectional views taken along lines A-A and B-B of FIG. 12.

Hereinafter, a surgical part 220 and a guide part 230 according to the second embodiment of the present invention and a conventional guide part 3 will be compared in detail with reference to FIGS. 12 and 13.

In the case of the drill head 11 inserted into the conventional guide part 3, a portion of the outer periphery of the drill head 11 is exposed to the buccal surface through an axial slit 4. In this case, the opening angle α of the drill head 11 with respect to the guide part 3 may be defined as an angle formed by a pair of open ends x1 and x2 of the guide part 3 and the rotation axis C of the drill head 11.

On the other hand, since the oblique slit 235 of the guide part 230 of the present invention is formed in a diagonal direction, an upper portion of the drill head 11 comes into contact with the circumferential end y1 of the first anti-separation part 233a, and a middle portion of the drill head 11 comes into contact with the circumferential end y2 of the second anti-separation part 233b. That is, the opening angle β of the drill head 11 with respect to the surgical part 220 may be defined as an angle formed by the circumferential ends y1 and y2 of the first and second anti-separation parts 233a and 233b and the rotation axis C of the drill head 11.

Here, the contact points y1 and y2 of the drill head 11 and the guide sleeve 230 move inward compared to the conventional contact points x1 and x2.

That is, as the oblique slit 235 is formed in the guide part 230, the opening angle β of the drill head 11 with respect to the surgical part 220 is reduced compared to the conventional opening angle α. Accordingly, the drill device 10 may be supported more stably on the inner peripheries of the surgical part 220 and the guide part 230, thereby improving the accuracy of drilling.

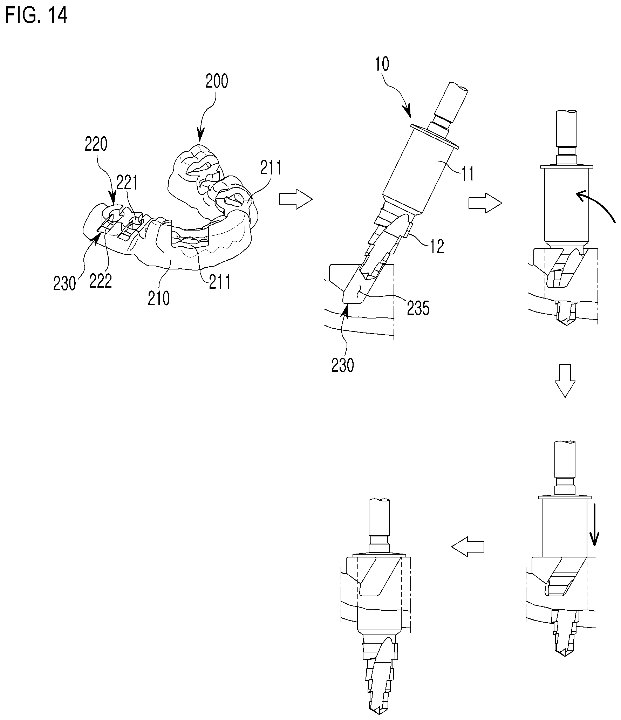

FIG. 14 is a drawing showing a method of using the implant surgery guide device according to the second embodiment of the present invention.

Hereinafter, the method of using the implant surgery guide device 200 according to the second embodiment of the present invention will be described in detail with reference to FIG. 14.

The boring means 12 of the drill device 10 is tilted to match an inclination angle of the oblique slit 235 so that the boring means 12 can pass through the oblique slit 235.

When the boring means 12 is inserted into the through hole 221 of the surgical part 220, the tilted drill device 10 is straightened and inserted toward the lower side of the through hole 221 so that the outer peripheral surface of the drill head 11 comes into surface contact with the inner peripheral surface of the surgical part 220.

Accordingly, the drill device 10 is rotatably supported along the inner periphery of the surgical part 220, and may form a perforation in the alveolar bone in the axial direction of the through hole 221.

In this way, even when a sufficient space for insertion of the drill device 10 is not secured, since the drill device 10 may pass through the side of the surgical part 220, the drill device 10 may be easily inserted into the through hole 221 of the surgical part 220 through the oblique slit 235, thereby improving the ease of use of the product.

Also, since an excessive pressure on the oral opening or the cheek/mouth corner for insertion of the drill device 10 may be minimized, the subject's discomfort may be significantly reduced.

In addition, when the oblique slit 235 is formed in the guide part 230, the opening angle β of the drill head 11 with respect to the surgical part 220 is reduced compared to the conventional opening angle α. Accordingly, the drill device 10 may be supported more stably on the inner peripheries of the surgical part 220 and the guide part 230, thereby improving the accuracy of drilling.

The description of the present invention described above is for illustrative purposes, and it should be understood that those of ordinary skill in the art to which the present invention pertains can easily modify it into other specific forms without changing the technical idea or essential features of the present invention. Therefore, it should be understood that the embodiments described above are illustrative in all respects and not restrictive. For example, each component described as a single type may be implemented in a distributed form, and likewise, components described as distributed may be implemented in a combined form.

The scope of the present invention is defined by the appended claims, and all changes or modifications derived from the meaning and scope of the claims and equivalents thereof should be construed as being included in the scope of the present invention.

## Claims

1. A guide sleeve comprising:
a guide body formed so that one side is open, and having a hollow structure having a guide hole, with which an outer peripheral surface of a drill head of a drill device comes into contact, formed in the center thereof; and
a pair of anti-separation parts extending respectively from the left and right ends of the guide body along the circumference of the guide body and spaced apart from each other to have an oblique slit formed therebetween.

2. The guide sleeve of claim 1, wherein the pair of anti-separation parts are spaced apart by a distance greater than or equal to the diameter of a boring means of the drill device and less than or equal to the outer diameter of the drill head.

3. The guide sleeve of claim 2, wherein the first anti-separation part is formed to have a decreasing circumferential length as it goes down along the axial direction of the guide hole, and
the second anti-separation part is formed to have a decreasing circumferential length as it goes up along the axial direction of the guide hole.

4. The guide sleeve of claim 3, wherein the opposing surfaces of the pair of anti-separation parts facing each other are formed as flat surfaces.

5. The guide sleeve of claim 3, wherein the opposing surfaces of the pair of anti-separation parts facing each other are formed as curved surfaces having a predetermined curvature.

6. The guide sleeve of claim 1, wherein the guide body and the pair of anti-separation parts are formed to have the same curvature.

7. An implant surgery guide device comprising the guide sleeve according to any one of claims 1 to 6, comprising:
a support configured to cover a buccal surface, a lingual surface, and an occlusal surface of a tooth; and
a surgical part having a through hole with which the outer periphery of the guide sleeve comes into contact along an implant surgical position on the support, and having an opening formed in one side so that the side is exposed.

8. An implant surgery guide device comprising:
a support configured to cover a buccal surface, a lingual surface, and an occlusal surface of a tooth;
a surgical part corresponding to an implant surgical position, having a through hole with which the outer peripheral surface of a drill head of a drill device comes into contact, and having an opening formed in one side thereof; and
a guide part formed in the opening of the surgical part and having an oblique slit, through which a boring means of the drill device may obliquely pass, formed therein.

9. The implant surgery guide device of claim 8, wherein the guide part comprises first and second anti-separation parts extending respectively from the left and right ends of the opening along the periphery of the opening and spaced apart from each other to have the oblique slit formed therebetween.

10. The implant surgery guide device of claim 9, wherein the first and second anti-separation parts are spaced apart by a distance greater than or equal to the diameter of the boring means of the drill device and less than or equal to the outer diameter of the drill head.

11. The implant surgery guide device of claim 9, wherein the first anti-separation part is formed to have a decreasing circumferential length as it goes down along the axial direction of the through hole, and
the second anti-separation part is formed to have a decreasing circumferential length as it goes up along the axial direction of the through hole.

12. The implant surgery guide device of claim 11, wherein the opposing surfaces of the first and second anti-separation parts facing each other are formed as flat surfaces.

13. The implant surgery guide device of claim 11, wherein the opposing surfaces of the first and second anti-separation parts facing each other are formed as curved surfaces having a predetermined curvature.

14. The implant surgery guide device of claim 9, wherein the surgical part and the first and second anti-separation parts are formed to have the same curvature.

15. The implant surgery guide device of claim 8, wherein the surgical part and the guide part are formed integrally.
